# EUROPEAN PATENT SPECIFICATION

(11) **EP 1 564 195 B1**
(45) Date of publication and mention of the grant of the patent: **15.06.2011**
(21) Application number: 02774789.8
(22) Date of filing: 03.10.2002
(51) Int. Cl.: C04B 35/04, C04B 35/10, C04B 35/52

(54) **UNFIRED FIREBRICK CONTAINING GRAPHITE FOR CEMENT INDUSTRY KILNS AND USE OF SAME**
UNGEBRANNTER ZIEGEL MIT GRAPHIT FÜR ZEMENTINDUSTRIEÖFEN UND DESSEN VERWENDUNG
BRIQUE REFRACTAIRE NON CUITE A BASE DE GRAPHITE POUR LES FOURS DE L'INDUSTRIE DU CIMENT ET SON PROCEDE D'UTILISATION

(43) Date of publication of application: 17.08.2005
(73) Proprietor: Fajardo Sola, Pedro, 46930 Quart de Poblet, Valencia (ES)
(72) Inventor: Fajardo Sola, Pedro, 46930 Quart de Poblet, Valencia (ES)
(74) Representative: Chanza Jordan, Dionisio
(86) International application number: PCT/ES2002/000468
(87) International publication number: WO 2004/031099

(56) References cited:
- WO-A-91/14661
- ES-A- 8 406 990
- JP-A- 04 119 962
- US-A- 4 196 894
- US-A- 5 318 933

## Description

The invention protected by this Patent is an unfired firebrick containing graphite for cement kilns and use of same.

Thus it is a brick to be used for lining cement kilns. It is composed of magnesium and aluminium containing graphite instead of chrome or iron as in other solutions, and can be deployed locally in specific areas of the kiln where its refractory capacity is best put to use.

The use of refractory materials is well known in the cement industry for lining the inside of kilns, to withstand high working temperatures, which can reach in some parts of the kiln up to 1,500 degrees Celsius, and which change rapidly within a range of 800 - 1,500 degrees Celsius with resulting physical and chemical reactions However, different compositions of refractory materials present different degrees of hardness and resistance to deformation. This invention achieves a refractory material of greater hardness and resistance than the materials hitherto employed, and thus longer life.

Various refractory materials are currently known and used but they all present operational and functional drawbacks, particularly as regards progressive deformation from high and rapidly changing kiln temperatures and the consequent chemical reactions. Thus, the use of materials developed hitherto presents certain limitations compared to the technical and cost advantages of the invention described herein. Thus, the use of crucible in glassmaking, limestone, silicon, chrome, aluminium oxide and silicon-aluminous glasses (F.H. Norton, Refractarios, first Spanish edition published by Blume, 1972) or the Japanese patent number JP11230679 on the role of porosity in refractory bricks, number JP11130485, as refractory panels or number JP11201649 as glass textures, and also in the arrangement of forms, in which one of the leading applications is the European patent number EP0911594 and the German number DE19729582 for pre-fabricated bricks or the patent for the invention of this applicant, Patent PCT number WO 02/059057, all these being close to the invention here presented but general and imprecise. They are all inventions derived from chemical compositions or arrangements, and either not applied specifically to the cement industry or placed in different areas within cement kilns.

These deficiencies are overcome by the chemical composition of this invention: magnesium oxide (MgO), alumina (Al2O3), graphite, improving additives and binding resins which increase operational functionality and performance and whose structure presents low porosity and high refractory capability.

These refractory bricks can be arranged in the following way:

With regards to the chemical components, a percentage by weight of at least 62 wt% of magnesium oxide MgO, between 12% and 20% of alumina Al2O3, and between 4% and 11% of graphite, between 7 - 9% of additives improvers in a whole composition added of aluminium powder, silicon metal, silicon carbide and clay; and resins between 3% and 4%. In terms of purity, the graphite should be 94% crystalline in scales.

In summary, the result obtained from this combination of elements leads to a technical advantage with a product of greater hardness and greater resistance to heat and physical and chemical reactions, from which various significant economic advantages derive, given that with the new invention, the number of outages of kilns falls, as do the amounts spent on maintenance and replacement of materials consumed in each working period, and advantages in the productive process for the busiest kilns - rotative kilns - obtaining greater resistance and hardness.

In order to obtain a better understanding of the aforesaid general characteristics, and with respect to application, herewith are attached a number of drawings of the invention as described below.

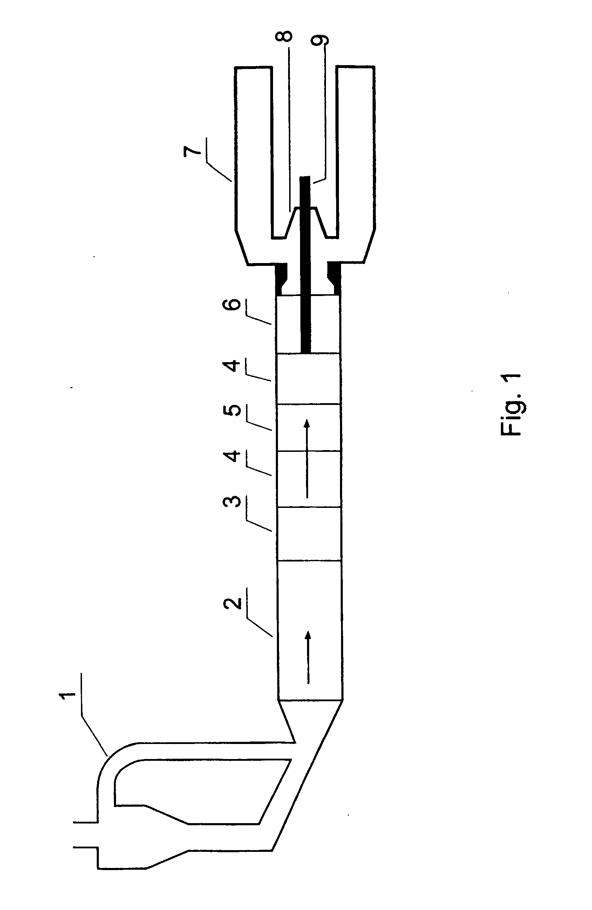

**Figure 1****:** Profile view of a rotative kiln for the cement industry using satellite coolers in a unit made up of an heat exchanger **(1),** and area for calcination **(2)**, safety zone **(3),** transition zones - high and low - **(4),** sintering zone **(5),** exit zone **(6),** coolers **(7)** kiln head **(8),** and flame throwers **(9)**.

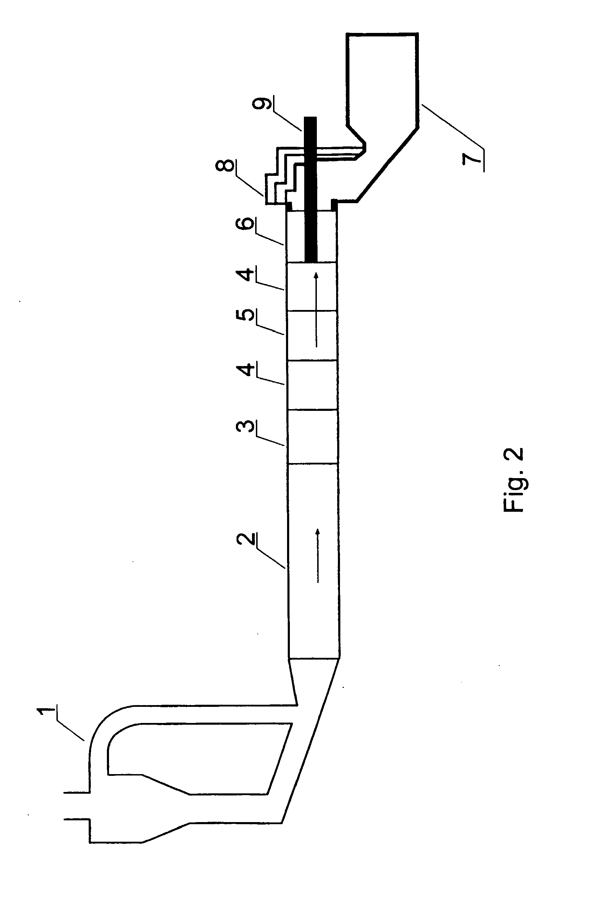

**Figure 2****:** Profile view of a rotative cement kiln with a grid cooler deployed in a unit combining a heat exchanger **(1)**, a burner zone **(2),** a safety zone **(3),** transition zones - high and low - **(4)**, sintering zone **(5),** exit zone **(6),** cooler **(7),** oven head **(8)** and flame thrower (**9**).

And showing the deployment in the kiln of the areas where this refractory brick is used: the transition zones - high and low - **(4)** and the sintering zone **(5).**

## Claims

1. Unfired firebrick for cement kilns, to be arranged in the inside lining of the low and high transition zones (4) and the sintering zone (5) **characterised by** the following chemical composition in weight percent: At least 62 wt% of magnesium oxide MgO, between 12% and 20% of alumina Al2O3, and between 4% and 11% of graphite, between 7 - 9% of additives improvers in a whole composition added of aluminium powder, silicon metal, silicon carbide and clay; and resins between 3% and 4%.

## Patentansprüche

1. Ungebrannter Ziegel für Zementindustrieöfen, einzubauen in die Innenbeschichtung der Übergangszonen -hoch und tief- (4) und der Sinterzone (5), dessen **dadurch gekennzeichnet** in folgender chemischer Zusammensetzung besteht (Angaben in Gewichtsprozent): mind. 62% Magnesiumoxid MgO, 12 - 20% Tonerde Al₂O₃, 4 - 11% Graphit, 9 - 7% Zusatzstoff -Zusammensetzung aus Aluminium-Pulver, Siliziummetall, Siliziumkarbid und Ton- sowie 3 - 4% Harze.

## Revendications

1. Brique réfractaire non cuite contenant du graphite et utilisée dans le revêtement intérieur des fours de l'industrie du ciment entre les zones de transition - haut et bas - (4) et la zone de synthérisation (5) **caractérisé en ce qu'**il a une composition chimique qui combine un pourcentage en poids: au moins 62% d'oxyde de magnésium MgO, entre 12 - 20 % d'alumine Al2O3, entre 4 - 11 % de graphite, entre 9 - 7 % d'additifs servant à améliorer et formant une composition conjointe d'aluminium en poudre, de silice métallique, de carbure de silice et d'argile, ainsi qu'entre 3 - 4% de résines.
